(19)

Europäisches Patentamt
European Patent Office
Office européen des brevets

(11) **EP 4 498 521 A1**

(12) **EUROPEAN PATENT APPLICATION**

(43) Date of publication:
**29.01.2025 Bulletin 2025/05**

(21) Application number: **24182265.9**

(22) Date of filing: **14.06.2024**

(51) International Patent Classification (IPC):
*H01Q 1/52* (2006.01)    *H01Q 9/04* (2006.01)
*H01Q 21/06* (2006.01)    *H01Q 21/24* (2006.01)

(52) Cooperative Patent Classification (CPC):
**H01Q 1/523; H01Q 9/0457; H01Q 21/065;
H01Q 21/24**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.07.2023 CN 202310912815**

(71) Applicant: **Beijing Xiaomi Mobile Software Co.,
Ltd.
Beijing 100085 (CN)**

(72) Inventor: **CHEN, Pengxu
Beijing (CN)**

(74) Representative: **Dehns Germany Partnerschaft
mbB
Theresienstraße 6-8
80333 München (DE)**

(54) **PHASED ARRAY ANTENNA UNIT, PHASED ARRAY ANTENNA AND RADAR SYSTEM**

(57)   The present invention relates to a phased array antenna unit (100), a phased array antenna and a radar system. The phased array antenna unit (100) includes: a first dielectric substrate (1); a radiator (2); and a plurality of decoupling metal patches (3). The plurality of decoupling metal patches (3) and the radiator (2) are arranged on the same surface of the first dielectric substrate (1). The side-by-side direction of the decoupling metal patches (3) is perpendicular to the direction of the electric field intensity when the radiator (2) is operating, and the radiator (2) is disposed between any two adjacent decoupling metal patches (3).

FIG. 1

EP 4 498 521 A1

## Description

## TECHNICAL FIELD

The present disclosure relates to the field of terminal technology, and in particular, to a phased array antenna unit, a phased array antenna and a radar system.

## BACKGROUND

When the phased array antenna is in operation, there is a certain amount of electromagnetic energy coupling between adjacent antenna units. That is, there will be a mutual coupling effect between adjacent antenna units. The existence of the mutual coupling effect will change the impedance characteristic of the antenna unit, affecting the beam shape for the phased array antenna.

## SUMMARY

The present disclosure provides a phased array antenna unit, a phased array antenna and a radar system, in order to address deficiencies in the related art.

According to a first aspect, there is provided a phased array antenna unit, including: a first dielectric substrate; a radiator; and a plurality of decoupling metal patches, where the plurality of decoupling metal patches and the radiator are arranged on a same surface of the first dielectric substrate, and a side-by-side direction of the plurality of decoupling metal patches is perpendicular to a direction of an electric field intensity when the radiator is operating, and the radiator is arranged between any two adjacent decoupling metal patches.

In some embodiments, the direction of the electric field intensity when the radiator is operating includes a first electric field direction and a second electric field direction, and the first electric field direction is perpendicular to the second electric field direction; the plurality of decoupling metal patches includes a plurality of first decoupling metal patches arranged side by side along the first electric field direction, and a plurality of second decoupling metal patches arranged side by side along the second electric field direction; and the radiator is located between two adjacent first decoupling metal patches, and the radiator is also located between two adjacent second decoupling metal patches.

In some embodiments, the decoupling metal patch includes a strip patch, and a length direction of the strip patch is perpendicular to a side-by-side direction of a plurality of strip patches, and a difference between length and width of the strip patch is greater than or equal to a set threshold.

In some embodiments, one or more strip patches are provided on a same side of the radiator.

In some embodiments, lengths of the plurality of strip patches are equal, or the lengths of the plurality of strips are in an arithmetic sequence, and a strip patch with smallest length is placed close to the radiator among a plurality of strip patches provided on the same side of the radiator.

In some embodiments, the decoupling metal patch includes an isosceles trapezoidal patch.

In some embodiments, an upper bottom of the isosceles trapezoidal patch is set toward the radiator.

In some embodiments, the phased array antenna unit further includes a second dielectric substrate, a feed layer, a via layer, a first feed probe and a second feed probe; where the second dielectric substrate is disposed below the first dielectric substrate, the first feed probe is disposed on a surface of the second dielectric substrate facing the first dielectric substrate, and the first feed probe is coupled to the radiator for power feeding; and the feed layer is disposed below the second dielectric substrate, the via layer is disposed between the second dielectric substrate and the feed layer, and the second feed probe passes through the via layer and is electrically connected to the feed layer, and the second feed probe also passes through the second dielectric substrate and is electrically connected to the first feed probe.

In some embodiments, the radiator is a rectangular radiator, and the decoupling metal patch is provided on each side of the rectangular radiator.

According to a second aspect, there is provided a phased array antenna, including a plurality of phased array antenna units according to any one of the above embodiments, where adjacent radiators share a same decoupling patch.

According to a third aspect, there is provided a radar system, including a phased array antenna according to any one of the above embodiments.

Embodiments of the present invention provide technical solutions that may include the following beneficial effects:

As can be seen from the above embodiments, the present invention provides a phased array antenna unit. By providing the decoupling metal patches side by side along the direction perpendicular to the direction of the electric field intensity on both sides of the radiator, the mutual coupling effect among the radiators is suppressed with the help of the radiated field generated by the decoupling metal patches. The decoupling effect is good, and performance indexes such as the low profiling and the lightweight of the phased array antenna are satisfied.

The above general description and the detailed descriptions that follow are merely exemplary and explanatory and do not limit the present invention, the scope of which is defined by the claims.

## BRIEF DESCRIPTION OF THE DRAWINGS

The accompanying drawings, which are incorporated in and constitute a part of this specification, illustrate embodiments consistent with the disclosure and together with the description, serve to explain the principles of the invention.

FIG. 1 is a schematic top view of a phased array antenna unit according to an embodiment of the present invention.

FIG. 2 are the standing wave characteristic curves of the dual ports of the phased array antenna unit in FIG. 1 in the case of side radiation according to an embodiment of the present invention.

FIG. 3 are the standing wave characteristic curves of the dual ports of the phased array antenna unit in FIG. 1 at the scanning angle of E plane 30° according to an embodiment of the present invention.

FIG. 4 are the standing wave characteristic curves of the dual ports of the phased array antenna unit in FIG. 1 at the scanning angle of E plane 45° according to an embodiment of the present invention.

FIG. 5 are the standing wave characteristic curves of the dual ports of the phased array antenna unit in FIG. 1 at the scanning angle of H plane 30° according to an embodiment of the present invention.

FIG. 6 are the standing wave characteristic curves of the dual ports of the phased array antenna unit in the related art without adding an isosceles trapezoidal patch in the case of side radiation according to an embodiment of the present invention.

FIG. 7 are the standing wave characteristic curves of the dual ports of the phased array antenna unit in the related art without adding an isosceles trapezoidal patch when the scanning angle is E plane 30° according to an embodiment of the present invention.

FIG. 8 are the standing wave characteristic curves of the dual ports of the phased array antenna unit in the related art without adding an isosceles trapezoidal patch when the scanning angle is E plane 45° according to an embodiment of the present invention.

FIG. 9 are the standing wave characteristic curves of the dual ports of the phased array antenna unit in the related art without adding an isosceles trapezoidal patch when the scanning angle is H plane 30° according to an embodiment of the present invention.

FIG. 10 are the isolation curves of the dual ports of the phased array antenna unit in the related art without an isosceles trapezoidal patch at various scanning angles according to an embodiment of the present invention.

FIG. 11 are the isolation curves of the dual ports of the phased array antenna unit in FIG. 1 at various scanning angles according to an embodiment of the present invention.

FIG. 12 is a radiation pattern of the phased array antenna with the first port of the phased array antenna unit in FIG. 1 in side radiation according to an embodiment of the present invention.

FIG. 13 is a radiation pattern of the phased array antenna with the second port of the phased array antenna unit in FIG. 1 in side radiation according to an embodiment of the present invention.

FIG. 14 is a radiation pattern of the phased array antenna with the first port of the phased array antenna unit in FIG. 1 at the scanning angle of E plane 30° according to an embodiment of the present invention.

FIG. 15 is a radiation pattern of the phased array antenna with the second port of the phased array antenna unit in FIG. 1 at the scanning angle of E plane 30° according to an embodiment of the present invention.

FIG. 16 is a radiation pattern of the phased array antenna with the first port of the phased array antenna unit in FIG. 1 at the scanning angle of E plane 45° according to an embodiment of the present invention.

FIG. 17 is a radiation pattern of the phased array antenna with the second port of the phased array antenna unit in FIG. 1 at the scanning angle of E plane 45° according to an embodiment of the present invention.

FIG. 18 is a radiation pattern of the phased array antenna with the first port of the phased array antenna unit in FIG. 1 at the scanning angle of H plane 30° according to an embodiment of the present invention.

FIG. 19 is a radiation pattern of the phased array antenna with the second port of the phased array antenna unit in FIG. 1 at the scanning angle of H plane 30° according to an embodiment of the present invention.

FIG. 20 is a schematic top view of another phased array antenna unit according to an embodiment of the present invention.

FIG. 21 is a schematic top view of yet another phased array antenna unit according to an embodiment of the present invention.

FIG. 22 is a schematic top view of yet another phased array antenna unit according to an embodiment of the present invention.

FIG. 23 is an exploded schematic diagram of yet another phased array antenna unit according to an embodiment of the present invention.

FIG. 24 is an array schematic diagram of a phased array antenna according to an embodiment of the present invention.

## DETAILED DESCRIPTION

Exemplary embodiments will be described in detail herein, examples of which are illustrated in the accompanying drawings. When the following description refers to the drawings, the same numbers in different drawings refer to the same or similar elements unless otherwise indicated. The implementations described in the following exemplary embodiments do not represent all implementations consistent with the present disclosure. Rather, they are merely examples of apparatus and methods consistent with aspects of the invention as detailed in the appended claims.

The terminology used in the present disclosure is for the purpose of describing particular embodiments only and is not intended to be limiting of the invention. As used in the present disclosure and the appended claims, the singular forms "a," "the" and "said" are intended to include the plural forms as well, unless the context clearly dictates otherwise. The term "and/or" as used herein refers to and includes any and all possible combinations of one or more of the associated listed items.

Although the terms first, second, third, etc. may be used in the present disclosure to describe various information, the information should not be limited to these terms. These terms are only used to distinguish information of the same type from each other. For example, without departing from the scope of the present invention, the first information may also be called second information, and similarly, the second information may also be called first information. Depending on the context, the word "if" as used herein may be interpreted as "when" or "at" or "in response to determining."

In the related art, methods such as field cancellation decoupling method, band-stop filter decoupling method, decoupling network method and strong coupling wide-angle matching layer can be used to eliminate mutual coupling effects. However, the structure of the band-stop filter decoupling method is complex, and the cost is high. It requires the addition of a directional coupler in the decoupling network method, which results in an excessively large area. The strong coupling wide-angle matching layer will increase the height of the antenna profile, and the weight will increase accordingly when there are more layers. Therefore, when eliminating mutual coupling, the field cancellation decoupling method is relatively simple in structure and principle, and has been widely used.

Therefore, the present invention provides a phased array antenna unit. By arranging a decoupling metal patch outside the radiator of the antenna unit, and by reasonably setting the position of the decoupling metal patch, the radiation field generated by the decoupling metal patch is used to suppress the mutual coupling effect between radiators, which has good decoupling effect, and meets the performance indicators of the phased array antenna such as low profile and lightweight.

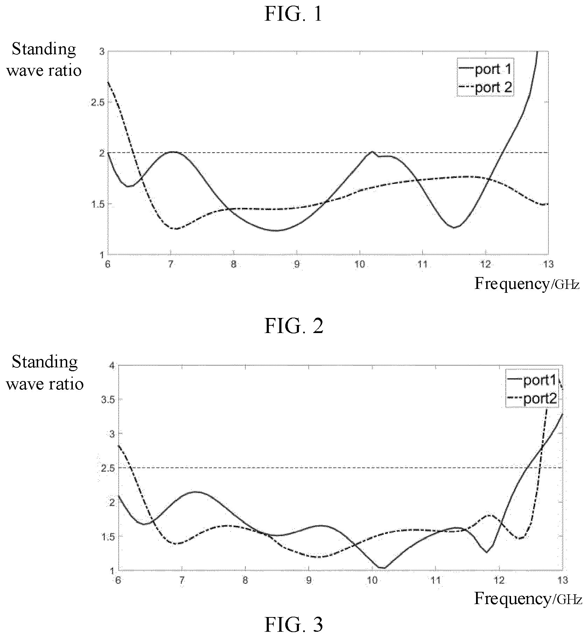

FIG. 1 is a schematic top view of a phased array antenna unit 100 according to an embodiment. As shown in FIG. 1, the phased array antenna unit 100 includes a first dielectric substrate 1, a radiator 2 and a plurality of decoupling metal patches 3. The plurality of decoupling metal patches 3 and the radiator 2 are arranged on the same surface of the first dielectric substrate 1. The plurality of decoupling metal patches 3 are arranged side by side in a direction perpendicular to the direction of the electric field intensity when the radiator 2 is operating. The radiator 2 is arranged between any two adjacent decoupling metal patches 3. That is, the plurality of decoupling metal patches 3 can be arranged uniformly on both sides of the radiator 2, or they can also be arranged non-uniformly on both sides of the decoupling metal patch 3. Based on the technical solution of the present disclosure, the side-by-side direction of the plurality of decoupling metal patches 3 is designed to be perpendicular to the direction of the electric field intensity when the radiator 2 is operating, and then the radiator 2 is arranged between any two adjacent decoupling metal patches 3. In this way, by limiting the positions of the decoupling metal patches 3, the effect of the decoupling metal patches 3 in suppressing the mutual coupling effect can be greatly improved.

In order to illustrate the effects of the present disclosure, some relevant background information will be described below. Specifically, in a phased array antenna including an antenna unit composed of N units, assuming that the excitation amplitude of each antenna unit is the same, but there is a phase difference $\Delta\varphi$, the expressions for the active reflection coefficient and active standing wave ratio of each unit are:

$$Active \ S_{11} = S_{11} + \sum_{i=2}^{N} S_{1i} e^{j\theta_{i1}}$$

$$Active \ VSWR = \frac{1 + |Active \ S_{11}|}{1 - |Active \ S_{11}|}$$

Among them, $Active \ S_{11}$ is the active reflection coefficient of the first antenna unit, $Active \ VSWR$ is the active standing wave ratio, $\theta_{i1}$ is the phase difference of each other antenna unit relative to the first antenna unit at the scanning angle $\theta_0$, and $S_{1i}$ is the transmission coefficient between the i-th antenna unit and the first antenna unit.

According to the active reflection coefficient and active standing wave ratio, it is known that, in order to reduce the mutual coupling effect between adjacent antenna units, it is necessary to reduce the transmission coefficient between antenna units, that is, to reduce the active reflection coefficient. Then, the decrease in reflection coefficient will cause the active standing wave ratio to decrease accordingly. Therefore, when the active standing wave ratio decreases, the mutual coupling effect between array elements can be reduced.

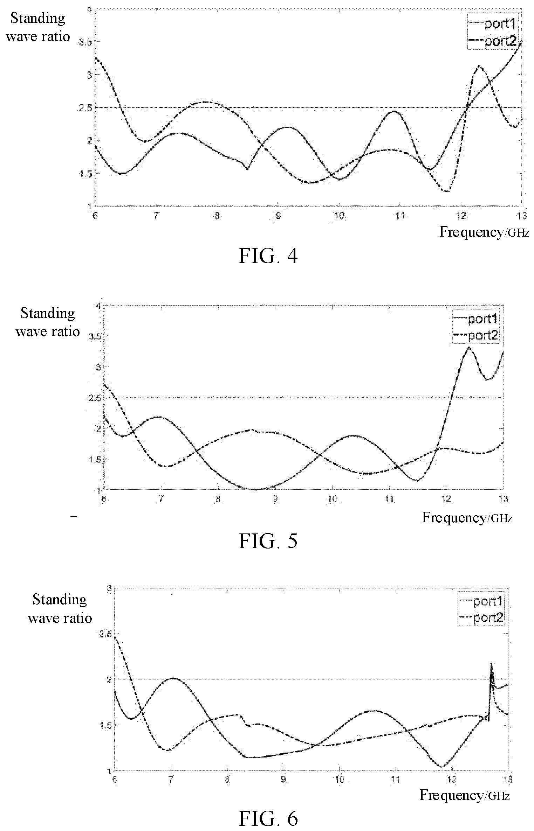

As an example, the decoupling metal patch 3 in FIG. 1 is an isosceles trapezoidal patch and the antenna unit is a doubly fed port, and the upper bottom of the isosceles trapezoidal patch is set towards the radiator 2. By simulation based on this structure, the standing wave characteristic curves of the two ports of the phased array antenna unit 100 in the case of side radiation. In addition, the E-plane and H-plane scans are analyzed respectively, and standing wave characteristic curves as shown in FIG. 3, FIG. 4 and FIG. 5 are obtained, which are the standing wave characteristic curves of the two ports at the scanning angle of E plane 30°, E plane 45°, and H plane 30°, respectively.

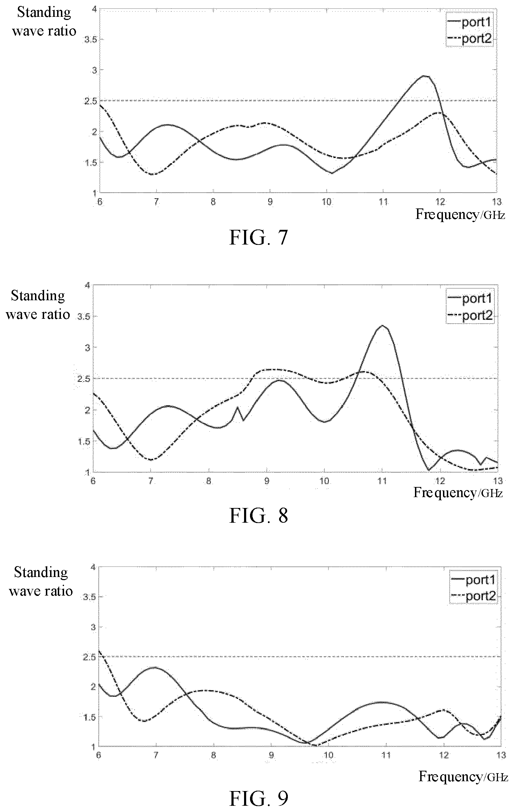

For comparison and illustration, when no isosceles trapezoidal patch is provided and other factors are the same, the standing wave characteristic curves of the two ports in the case of side radiation as shown in FIG. 6 and the standing wave characteristic curves at the same E-plane and H-plane scanning angles as shown in FIG. 7 to FIG. 9, which are added by the inventor, are obtained by simulation. In the above characteristic curves, the horizontal coordinate is labeled as frequency, and the vertical coordinate is labeled as active standing wave ratio. The solid line represents the change curve of the active standing wave ratio versus frequency of the first port at the same scanning angle. The dotted line represents the change curve of the active standing wave ratio versus frequency of the second port at the same scanning angle.

Observing FIG. 2, FIG. 3, FIG. 4 and FIG. 5, and taking 9.6GHz as the intermediate frequency point as an example, it can be seen that, within the 50% bandwidth range, that is, within the frequency range of about 8GHz-11GHz, the peak values of the active standing wave ratio are all less than 2.5 in the case of side radiation and at other scanning angles. In the antenna unit without isosceles trapezoidal patches, observing FIG. 6, FIG. 7, FIG. 8 and FIG. 9, and taking 9.6GHz as the intermediate frequency point as an example, it can be seen that, within the 50% bandwidth range, the peak values of the active standing wave ratio can be close to 3.5 in the case of side radiation and at other scanning angles. Therefore, through comparison of simulation parameters, it can be seen that the technical solution of the present disclosure can reduce the active standing wave ratio of the phased array antenna unit 100, thereby achieving the purpose of reducing the mutual coupling effect between antenna units.

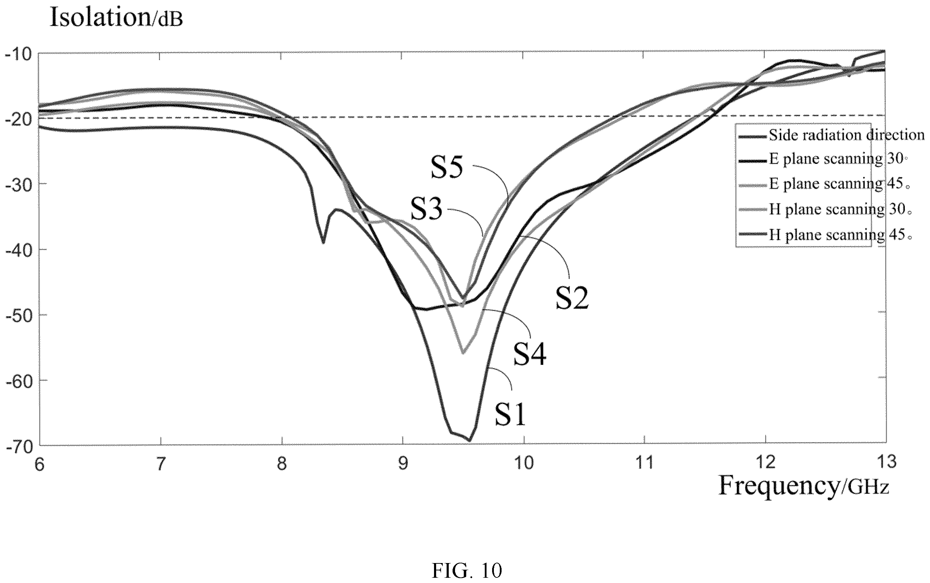

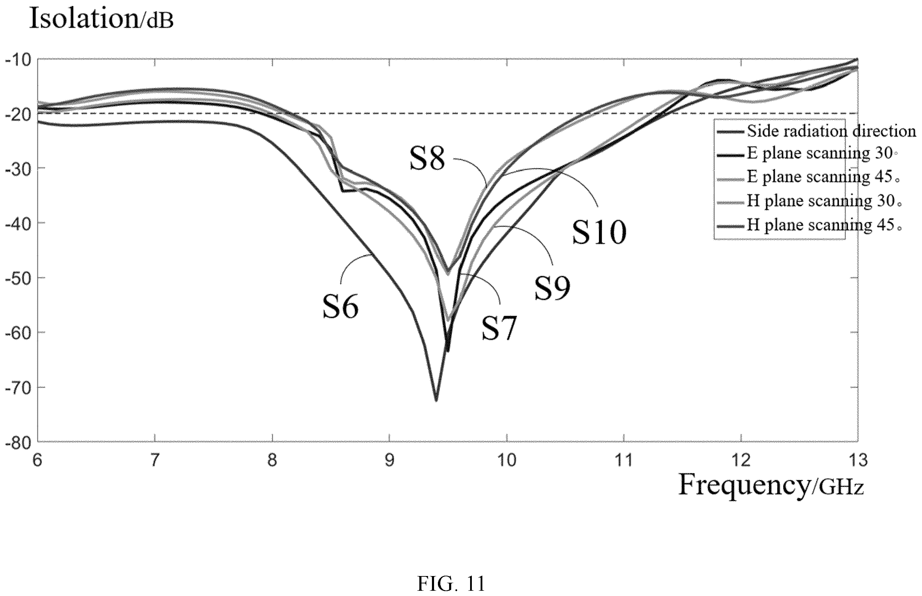

Moreover, FIG. 10 shows the isolation curves between the two ports without isosceles trapezoidal patches at various scanning angles. The curve S 1 is the isolation curve between the two ports in the case of side radiation. The curve S2 is the isolation curve between the two ports at the scanning angle of E plane 30°. The curve S3 is the isolation curve between the two ports at the scanning angle of E plane 45°. The curve S4 is the isolation curve between the two ports at the scanning angle of H plane 30°. The curve S5 is the isolation curve between the two ports at the scanning angle of H plane 45°. FIG. 11 shows the isolation curves between the two ports when adding isosceles trapezoidal patches. The curve S6 is the isolation curve between the two ports in the case of side radiation. The curve S7 is the isolation curve between the two ports at the scanning angle of E plane 30°. The curve S8 is the isolation curve between the two ports at the scanning angle of E plane 45°. The curve S9 is the isolation curve between the two ports at the scanning angle of H plane 30°. The curve S10 is the isolation curve between the two ports at the scanning angle of H plane 45°. In the above isolation curves, the horizontal coordinate is frequency and the vertical coordinate is isolation.

Comparing curve S1 and curve S6, curve S2 and curve S7, curve S4 and curve S8, curve S9 and curve S10 respectively, it can be seen that the general shape of the isolation characteristic curve has basically not changed under each side radiation situation and each scanning angle. Therefore, it can be considered that the impact of adding an isosceles trapezoidal patch on the isolation is relatively small. The present disclosure can reduce the mutual coupling effect between antenna units when adding an isosceles trapezoidal patch, but it does not cause isolation between dual feed ports.

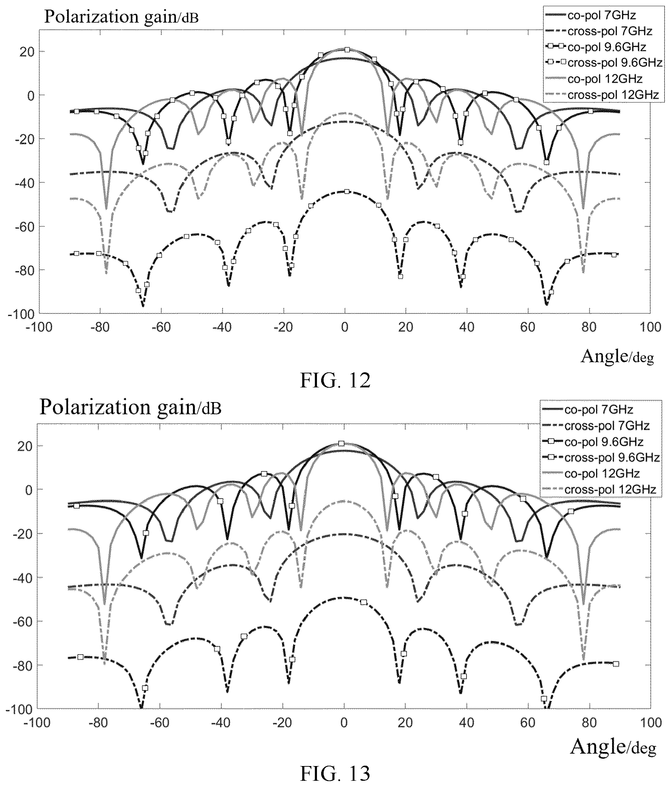

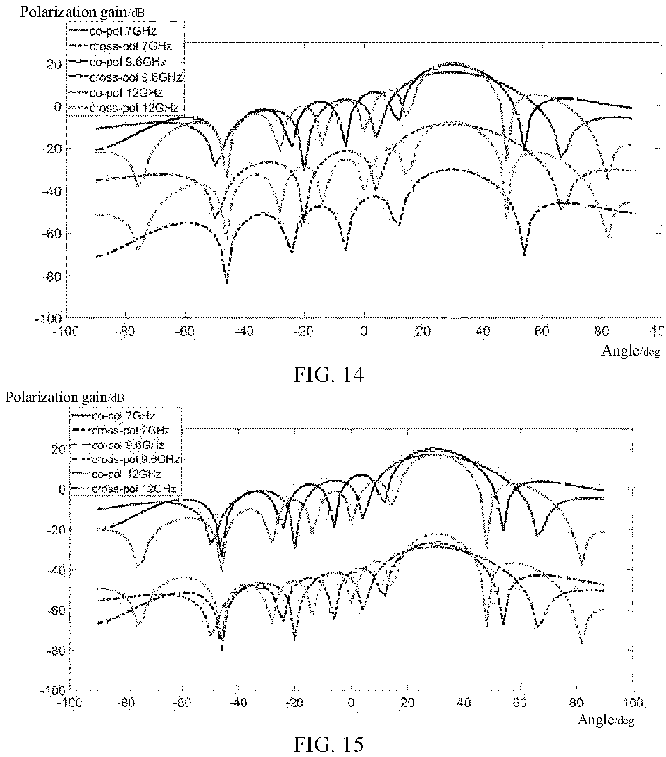

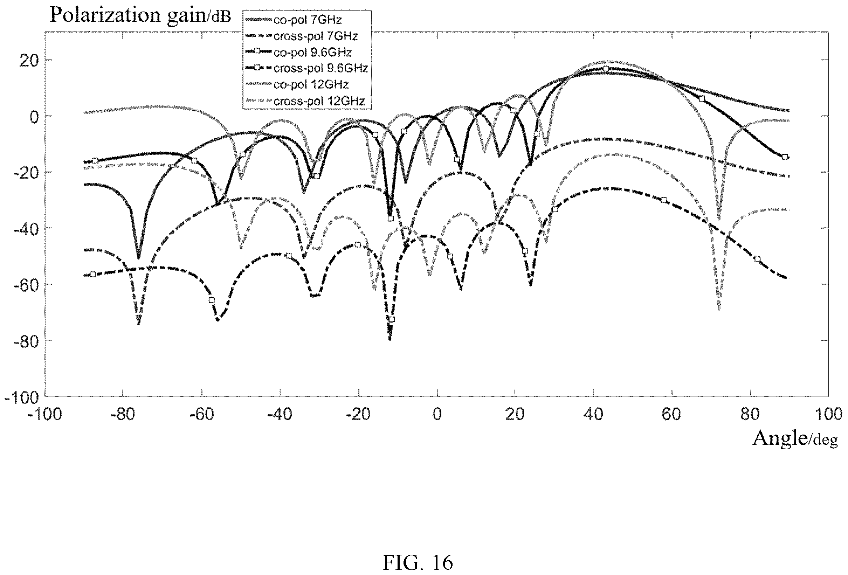

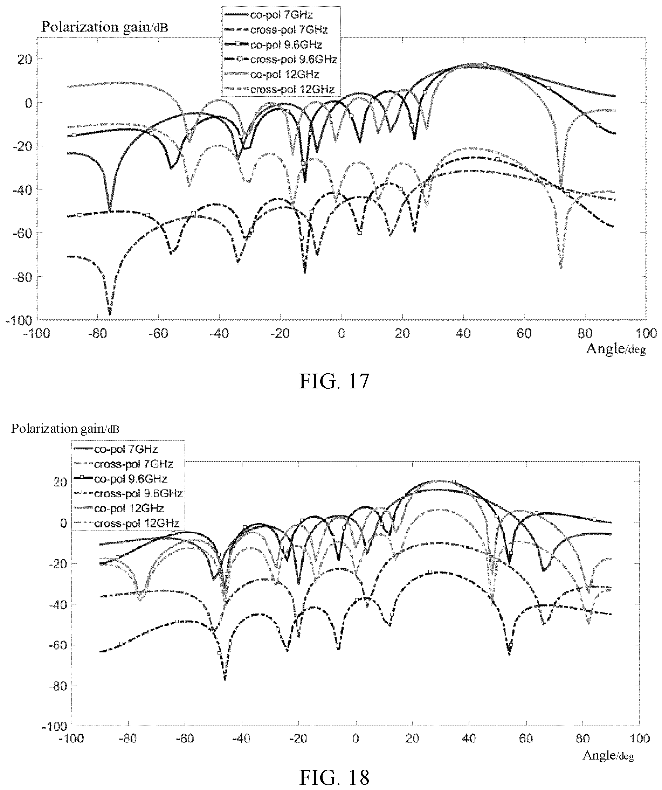

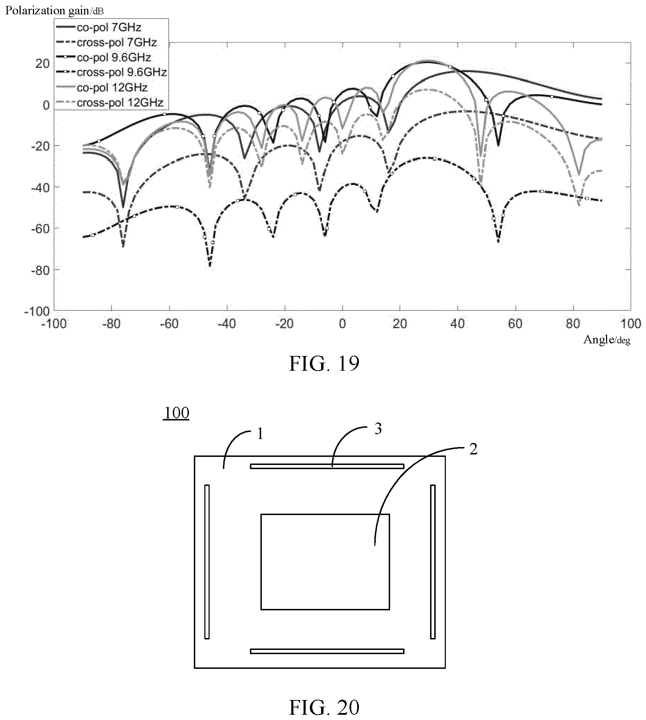

The antenna unit with the isosceles trapezoidal patch is applied to the 7×7 phased array antenna for simulation, and three frequency points of 7GHz, 9.6GHz and 12GHz are selected. The radiation patterns of the dual-port phased array antenna in the case of side radiation and at various scanning angles, as shown in FIG. 12, FIG. 13, FIG. 14, FIG. 15, FIG. 16, FIG. 17, FIG. 18 and FIG. 19, are further obtained. FIG. 12 is the radiation pattern of the phased array antenna with the first port in side radiation. FIG. 13 is the radiation pattern of the phased array antenna with the second port in side radiation. FIG. 14 is the radiation pattern of the phased array antenna with the first port at the scanning angle of E plane 30°. FIG. 15 is the radiation pattern of the phased array antenna with the second port at the scanning angle of E plane 30°. FIG. 16 is the radiation pattern of the phased array antenna with the first port at the scanning angle of E plane 45°. FIG. 17 is the radiation pattern of the phased array antenna with the second port at the scanning angle of E plane 45°. FIG. 18 is radiation pattern of the phased array antenna with the first port at the scan angle of H plane 30°. FIG. 19 is the radiation pattern of the phased array antenna with the second port at the scanning angle of H plane 30°. In FIG. 12 to FIG. 19, the solid lines are the main polarization patterns, and the dotted lines are the cross-polarization patterns. Observing the phased array antenna pattern in FIG. 12 to FIG. 19, it can be seen that in the case of side radiation and at respective scanning angles, the main polarization gain is greater than the cross-polarization gain, which meets the design requirement of the phased array antenna.

In the embodiment shown in FIG. 1, assuming that the radiator 2 is a dual-polarized radiator, then the radiator 2 has two directions of the electric field intensity. That is, the electric field direction of the electromagnetic wave of the radiator 2 can include a first electric field direction and a second electric field direction. The first electric field direction is a direction of the electric field intensity during vertical polarization, and the direction of the electric field intensity is parallel to the ground. The second electric field direction is a direction of the electric field intensity during horizontal polarization, and the direction of the electric field intensity is perpendicular to the ground. That is, the first electric field direction is the horizontal direction with the ground in FIG. 1, the second electric field direction is the vertical direction in FIG. 1.

The first electric field direction is perpendicular to the second electric field direction. The plurality of decoupling metal patches 3 may include a first decoupling metal patch 3A arranged parallel to the first electric field direction, and a second decoupling metal patch 3B arranged parallel to the second electric field direction. The radiator 2 may be arranged between two adjacent first decoupling metal patches 3A and between two adjacent second decoupling metal patches 3B. Therefore, when the radiator 2 is a dual-polarized antenna, the decoupling metal patches 3 can be arranged in directions perpendicular to various polarization direction to enhance the decoupling effect.

In other embodiments, the radiator 2 can be a single-polarized radiator. That is, there is only one direction of the electric field intensity when the radiator 2 is operating, such as the horizontal direction or the vertical direction in FIG. 1. At this time, the decoupling metal patches 3 can be set only on the horizontal sides of the radiator 2, or the decoupling metal patches 3 can be set only on the vertical sides of the radiator 2, which can be specifically determined according to the polarity direction of the radiator 2. When the radiator 2 is a single-polarized radiator, since the phased array antenna unit 100 needs to be used in a phased array antenna later, multiple decoupling metal patches 3 can be arranged side by side in a direction parallel to the electric field direction of the electromagnetic wave to enhance the decoupling effect. For example, assuming that the radiator 2 is a rectangular radiator, a decoupling metal patch 3 can be provided on each side of the rectangular radiator.

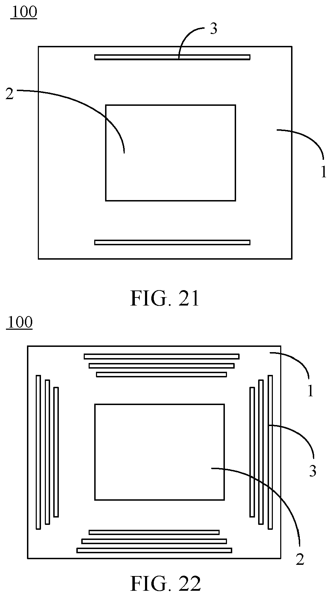

In the embodiment shown in FIG. 1, the decoupling metal patch 3 is an isosceles trapezoidal patch as an example. In other embodiments, as shown in FIG. 20, the decoupling metal patch 3 may include a strip patch. The length direction of the strip patch is perpendicular to the side-by-side direction of multiple strip patches, and the difference between the length and width of the strip patch is greater than or equal to the set threshold. When the decoupling metal patch 3 is a strip patch, the arrangement can refer to the arrangement of the isosceles trapezoidal patch in the previous embodiment. For example, as shown in FIG. 20, when the radiator 2 is a dual-polarized radiator, a strip patch can be provided on each side of the radiator 2. Or, as shown in FIG. 21, when the radiator 2 is a single-polarized radiator, corresponding strip patches can be set only on the periphery of a set of opposite sides of the radiator 2. The side-by-side direction of the strip patches is perpendicular to the direction of the electric field intensity when the radiator 2 is operating, which will not be repeated here. When the radiator 2 in FIG. 21 is a single-polarized radiator, strip patches can also be arranged on each side of the radiator 2, which is not limited by the present disclosure.

In the embodiment shown in FIG. 20 and FIG. 21, a single strip patch is arranged on each side of the radiator 2 as an example. In other embodiments, multiple strip patches can also be arranged on each side of the radiator 2. Optionally, the lengths of the plurality of strip patches can be equal. Alternatively, as shown in FIG. 22, the lengths of the plurality of strip patches are different. For example, the lengths of the plurality of strip patches can be set in an arithmetic sequence, and the strip patch with the smallest length is arranged close to the radiator 2 among the plurality of strip patches arranged on the same side of the radiator 2. In FIG. 22, the lengths of the plurality of the strip patches are set in an arithmetic sequence, and the decoupling effect is equivalent to that of isosceles trapezoidal patches. In fact, the lengths of the plurality of the strip patches being set in an arithmetic sequence can be considered to be another expression of isosceles trapezoidal patches. The isosceles trapezoidal patch is designed for continuity of current.

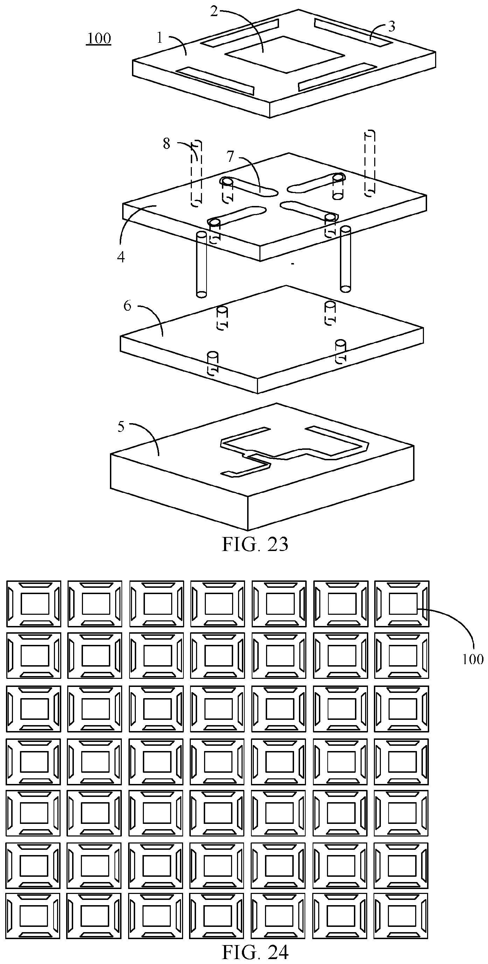

As shown in FIG. 23, it is an exploded view of the layer structure of the phased array antenna unit 100. As shown in FIG. 23, the phased array antenna unit 100 may also include a second dielectric substrate 4, a feed layer 5, a via layer 6, a first feed probe 7 and a second feed probe 8. The second dielectric substrate 4 is disposed below the first dielectric substrate 1. The feed layer 5 is disposed below the second dielectric substrate 4. The via layer 6 is disposed between the second dielectric substrate 4 and the feed layer 5. The first feed probe 7 is disposed on the surface of the second dielectric substrate 4 facing the first dielectric substrate 1, and the radiator 2 is coupled and fed through the first feed probe 7. The second feed probe 8 passes through the via layer 6 and the second dielectric substrate 4, and is connected to the feed layer 5 and the first feed probe 7 respectively, so that the signal transmission between the feed layer 5 and the radiator 2 can be realized. The feed layer 5 may include structures such as radio frequency devices and required dielectric substrate layers.

As shown in FIG. 24, the present inventionalso provides a phased array antenna. The phased array antenna may include a plurality of phased array antenna units described in any of the above embodiments. The plurality of phased array antenna units are arranged in a regular array, and the adjacent radiators 2 can share the same decoupling patch. Furthermore, the present disclosure also provides a radar system. The radar system may include the phased array antenna described in the above embodiments. The radar system may be applied to satellites, fighter aircraft, and other apparatus.

The present disclosure is intended to cover any variations, uses, or adaptations of the invention falling within the scope of the claims.

The present invention is not limited to the precise structures described above and illustrated in the accompanying drawings, and various modifications and changes may be made without departing from the scope thereof. The scope of the disclosure is limited only by the appended claims.

## Claims

1. A phased array antenna unit (100), comprising:

   a first dielectric substrate (1);
   a radiator (2); and
   a plurality of decoupling metal patches (3), wherein the plurality of decoupling metal patches (3) and the radiator (2) are arranged on a same surface of the first dielectric substrate (1), and a side-by-side direction of the plurality of decoupling metal patches (3) is perpendicular to a direction of an electric field intensity when the radiator (2) is operating, and the radiator (2) is arranged between any two adjacent decoupling metal patches (3).

2. The phased array antenna unit according to claim 1, wherein the direction of the electric field intensity when the radiator (2) is operating comprises a first electric field direction and a second electric field direction, and the first electric field direction is perpendicular to the second electric field direction;

   the plurality of decoupling metal patches (3) comprises a plurality of first decoupling metal patches (3A) arranged side by side along the first electric field direction, and a plurality of second decoupling metal patches (3B) arranged side by side along the second electric field direction; and
   the radiator (2) is located between two adjacent first decoupling metal patches (3A), and the radiator (2) is also located between two adjacent second decoupling metal patches (3B).

3. The phased array antenna unit according to claim 1 or 2, wherein a decoupling metal patch (3) comprises a strip patch, and a length direction of the strip patch are perpendicular to a side-by-side direction of a plurality of strip patches, and a difference between length and width of the strip patch is greater than or equal to a set threshold.

4. The phased array antenna unit according to claim 3, wherein one or more strip patches are provided on a same side of the radiator (2).

5. The phased array antenna unit according to claim 4, wherein lengths of the plurality of strip patches are equal, or the lengths of the plurality of strips are in an arithmetic sequence, and a strip patch with smallest length is placed close to the radiator (2) among a plurality of strip patches provided on the same side of the radiator (2).

6. The phased array antenna unit according to claim 1 or 2, wherein a decoupling metal patch (3) comprises an isosceles trapezoidal patch.

7. The phased array antenna unit according to claim 6, wherein an upper bottom of the isosceles trapezoidal patch is set toward the radiator.

8. The phased array antenna unit according to any one of claims 1 to 7, further comprising a second dielectric substrate (4), a feed layer (5), a via layer (6), a first feed probe (7) and a second feed probe (8);

   wherein the second dielectric substrate (4) is disposed below the first dielectric substrate (1), the first feed probe (7) is disposed on a surface of the second dielectric substrate (4) facing the first dielectric substrate (1), and the first feed probe (7) is coupled to the radiator (2) for power feeding; and
   the feed layer (5) is disposed below the second dielectric substrate (4), the via layer (6) is disposed between the second dielectric substrate (4) and the feed layer (5), and the second feed probe (8) passes through the via layer (6) and is electrically connected to the feed layer (5), and the second feed probe (8) also passes through the second dielectric substrate (4) and is electrically connected to the first feed probe (7).

9. The phased array antenna unit according to any one of claims 1 to 8, wherein the radiator (2) is a rectangular radiator, and a decoupling metal patch (3) is provided on each side of the rectangular radiator.

10. A phased array antenna, comprising a plurality of phased array antenna units (100) according to any one of claims 1 to 9, wherein adjacent radiators (2) share a same decoupling patch (3).

11. A radar system, comprising a phased array antenna according to claim 10.

FIG. 1

Standing wave ratio vs Frequency/GHz — port 1, port 2

FIG. 2

Standing wave ratio vs Frequency/GHz — port1, port2

FIG. 3

FIG. 4

FIG. 5

FIG. 6

Standing
wave ratio

FIG. 7

Standing
wave ratio

FIG. 8

Standing
wave ratio

FIG. 9

FIG. 10

FIG. 11

EP 4 498 521 A1

FIG. 12

FIG. 13

FIG. 14

FIG. 15

FIG. 16

EP 4 498 521 A1

FIG. 17

FIG. 18

FIG. 19

FIG. 20

100

FIG. 21

100

FIG. 22

FIG. 23

FIG. 24

Europäisches
Patentamt

European
Patent Office

Office européen
des brevets

# EUROPEAN SEARCH REPORT

Application Number

EP 24 18 2265

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 072 294 B (UNIV ELECTRONIC SCI & TECH CHINA) 25 January 2022 (2022-01-25) * abstract; figures 1-3 * | 1-11 | INV. H01Q1/52 H01Q9/04 H01Q21/06 |
| X | US 2023/039854 A1 (CAO YUNFEI [CN] ET AL) 9 February 2023 (2023-02-09) | 1-5,9-11 | H01Q21/24 |
| A | * paragraph [0061] - paragraph [0065]; figures 1-8 * | 6-8 | |
| X | US 2021/313703 A1 (STANLEY MANOJ [GB] ET AL) 7 October 2021 (2021-10-07) | 1-5,9-11 | |
| A | * paragraph [0054] - paragraph [0056]; figures 2-10 * | 6-8 | |
| X | US 2023/101577 A1 (YONG ZHENGDONG [CN]) 30 March 2023 (2023-03-30) | 1-5,9-11 | |
| A | * paragraph [0055] - paragraph [0056]; figures 5,12,13,16 * | 6-8 | |

TECHNICAL FIELDS
SEARCHED (IPC)

H01Q

The present search report has been drawn up for all claims

| Place of search | Date of completion of the search | Examiner |
|---|---|---|
| The Hague | 15 November 2024 | Pastor Jiménez, J |

EPO FORM 1503 03.82 (P04C01)

## ANNEX TO THE EUROPEAN SEARCH REPORT
## ON EUROPEAN PATENT APPLICATION NO.

EP 24 18 2265

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2024

| Patent document cited in search report | | Publication date | Patent family member(s) | | Publication date |
|---|---|---|---|---|---|
| CN 112072294 | B | 25-01-2022 | NONE | | |
| US 2023039854 | A1 | 09-02-2023 | CN | 113809556 A | 17-12-2021 |
| | | | US | 2023039854 A1 | 09-02-2023 |
| | | | WO | 2023010680 A1 | 09-02-2023 |
| US 2021313703 | A1 | 07-10-2021 | CN | 111052504 A | 21-04-2020 |
| | | | US | 2021313703 A1 | 07-10-2021 |
| | | | WO | 2019213878 A1 | 14-11-2019 |
| US 2023101577 | A1 | 30-03-2023 | CN | 111710970 A | 25-09-2020 |
| | | | EP | 4156411 A1 | 29-03-2023 |
| | | | US | 2023101577 A1 | 30-03-2023 |
| | | | WO | 2021249045 A1 | 16-12-2021 |

EPO FORM P0459

For more details about this annex : see Official Journal of the European Patent Office, No. 12/82